# EUROPEAN PATENT SPECIFICATION

(11) **EP 1 279 806 B1**
(45) Date of publication and mention of the grant of the patent: **03.03.2004**
(21) Application number: 02077790.0
(22) Date of filing: 10.07.2002
(51) Int. Cl.: F02B 33/22

(54) **Two-stroke-cycle internal combustion engine using pneumatically assisted direct fuel injection**
Zweitaktbrennkraftmaschine mit pneumatisch-gestüzter direkter Kraftstoffeinspritzung
Moteur à combustion interne à deux temps avec injection directe du combustible assistée pneumatiquemant

(30) Priority: 26.07.2001 IT MI20011625
(43) Date of publication of application: 29.01.2003
(73) Proprietor: PIAGGIO & C. S.p.A., 56025 Pontedera (Pisa) (IT)
(72) Inventor: Nesti, Paolo, 56010 Ghezzano (Pisa) (IT)
(74) Representative: De Gregori, Antonella

(56) References cited:
- WO-A-01/46574
- WO-A-90/15917
- US-A- 3 179 092

## Description

The present invention refers to a two-stroke-cycle internal combustion engine using pneumatically assisted direct fuel injection, more particularly equipped with an automatic valve and operating through a compressor which is integrated in the engine also having the function of turbocharging.

In a two-stroke-cycle engine the exhaust stage and the insertion of fresh gases into the cylinder (cleaning stage) happen almost simultaneously, when the piston is in the proximity of its bottom dead point. The superimposition of the input and exhaust stages causes a part of the mixture prepared in the carburettor (around 30%) which is not involved in the combustion to be lost. Such a part of the mixture is released directly by the exhaust pipe and thus this stage constitutes the most critical point of the two-stroke-cycle from the point of view of pollution and of consumption.

The operation diagram of the direct fuel injection into the cylinder, by its very nature, makes the release of unburnt fuel very improbable in that the injection generally takes place with the exhaust pipe almost completely closed. Cleaning carried out with a mixture, characteristic of two-stroke-cycle engines, is replaced by cleaning with air, bringing a definite reduction in specific consumption and hydrocarbon emissions.

Various solutions and devices which allow internal combustion engines to use pneumatically assisted direct fuel injection are currently known.

The operating principal of such systems is based upon the injection of an air-petrol mixture into a combustion chamber so as to obtain, even when there is a low fuel pressure, a good vaporisation of the spray with the consequent improvement in combustion efficiency.

In a simple injection system the air can leak directly out from the engine crankcase, enriched by a petrol injector and then injected into the combustion chamber through a valve operated by an eccentric cam. The mechanical complexity of the use of an eccentric cam and of the relative lubrication system does not allow high levels of operation to be achieved and for this reason such a system cannot be suitably applied to small displacements, also due to the elevated costs.

An evolution of such a system was obtained by removing the injection valve driving cam and making such a valve completely automatic in terms of the physical opening and the time for which it is open. In this solution the valve is operated by the pressure generated in the engine crankcase which through a decidedly long pipe rests upon the valve which is positioned on the cylinder head. The main drawback of such a length is the fact that the injection stage can only be optimised by a few engine speeds and thus such a system is limited to road vehicles.

Systems which directly feed the engine with a mixture of petrol and pressurised air through a direct injector are also known.

A particularly interesting system foresees a control system both for the petrol feeder and for the direct injector. In a chamber upstream from the direct fuel injector the air, coming from a compressor, and the fuel are mixed. The mixture thus formed is then introduced into the combustion chamber through a direct injector operated by an electronic control unit.

This system implemented with electronic components is expensive and onerous from the point of view of fuel consumption; consequently its application to small displacements for motorcycles can be problematic.

Another alternative solution capable of overcoming the drawbacks previously described is given by a compressor, positioned directly onto the cylinder head so as to reduce the unused spaces, which injects an air/petrol mixture into the engine. The petrol feeding system can be constituted of a carburettor or an electronic injector and an electric petrol pump. The injection into the driving cylinder takes place through an automatic valve operated automatically by the pressure difference between the compressor chamber and the combustion chamber.

This last solution, however, carries a high cost for the mechanical part which transmits the motion from the drive shaft to the compressor ahead.

The purpose of the present invention is to realise a two-stroke-cycle internal combustion engine which generally resolves the technical problems described above. In particular, a purpose of the present invention is to realise a two-stroke-cycle internal combustion engine which accounts for and overcomes the legislative constraints regarding polluting emissions, which are becoming increasingly restrictive for two-stroke-cycle engines.

These purposes according to the present invention are achieved by realising a two-stroke-cycle internal combustion engine using pneumatically assisted direct fuel injection as disclosed in claim 1.

Further characteristics of the invention are highlighted by the successive claims.

The characteristics and advantages of a two-stroke-cycle internal combustion engine using pneumatically assisted direct fuel injection according to the present invention will become clearer from the following description, given as an example and not for limiting purposes, referring to the attached schematised drawings in which:
figure 1 is a section of a portion of a two-stroke-cycle internal combustion engine using pneumatically assisted direct fuel injection according to the present invention,

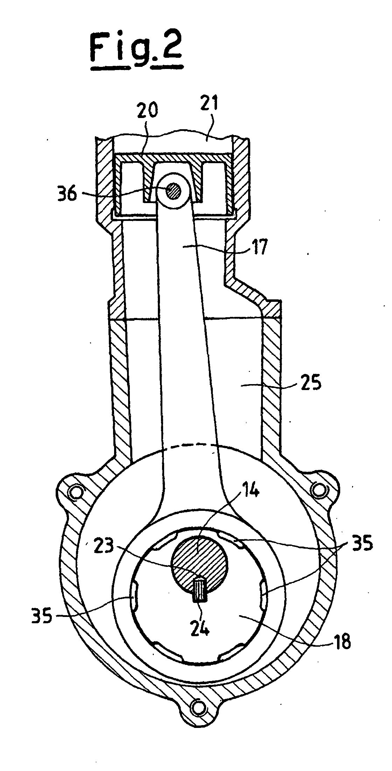

figure 2 is a section in correspondence with the compressor piston,
figure 3 is an enlarged cross section of the compressor piston in correspondence with the relative pin and the lateral plug in which the countersunk channels are formed,
figure 4 is a sectioned side view of the portion of the engine shown in figure 1 and relative to a feeding system in a crankcase and in a cylinder head,
figure 5 is an enlarged section of a pneumatic valve with a floating needle and automatic operation,
figures 6a-6f show an operation diagram of the engine relative to a complete cycle, at 60° intervals.

With reference to the figures, a two-stroke-cycle internal combustion engine using pneumatically assisted direct fuel injection according to the invention is shown, at least in part, in one of its schematic ensemble views.

Indeed, a cylindrical body 11 of the aforementioned two-stroke-cycle internal combustion engine, in which a relative piston 12 which slides inside a driving cylinder 13 is placed, is shown. A drive shaft 14 carries a first connection rod 16 and is supported upon bearings 15. The drive shaft 14, further down its length, also supports, through an eccentric cam 18, a second connection rod 17 with the interposition of a roller retainer 19 which actuates a piston 20 of a reciprocating compressor formed in the cylindrical body 11 below a cylinder head 22. Moreover, for a correct assembly of the eccentric cam 18, a suitable hole 23 is foreseen on the drive shaft 14 into which a plug 24, which serves as an angular reference for the phasing of the compressor, is inserted.

A compression chamber or compression cylinder 21 contains the piston 20 of the compressor while it can be seen that the volume of a compressor crankcase 25, containing the second connection rod 17, is in communication with the volume of the engine crankcase 26 through suitable apertures 27 and through one of the quoted ball bearings 15.

From a point of view of the general structure it should be noted, moreover, that an automatic valve 28 for the introduction of the air/petrol mixture and a sparking plug 29 are placed in the cylinder head 22. Moreover a reed group 30 (not shown) and a throttle body 31 for the emission of air alone, and oil through a hole 32, in a maximum turbulence area downstream of a respective throttle 33, directly drawn in by the engine crankcase 26.

Furthermore, the second connection rod 17, mounted on the eccentric cam 18, with the interposition of a roller retainer 19, carries two shoulder washers 34 on its sides, equipped with apertures 35 for the passage of oil for lubrication and having the function of containing the connection rod and the roller retainer.

Moreover, it should be noted that the base of the second connection rod or secondary connection rod 17 has a floating plug 36 positioned in its hole 47, upon such a plug 36 the piston 20 of the reciprocating compressor is mounted thanks to holes 46 in the piston 20.

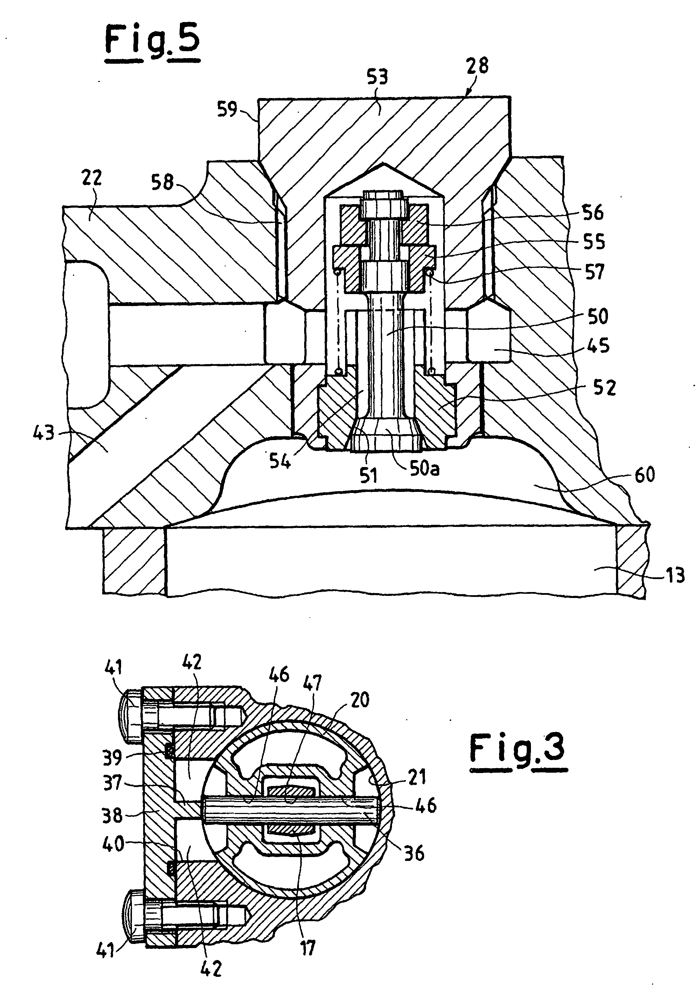

As shown in figure 3, the plug 36 is kept in its seat on one side of the chamber or cylinder 21 of the compressor and on the other side, in a partial manner, by a wall 37 obtained directly in a closing cap 38 with the relative sealing ring 39. The closing cap 38 is positioned in correspondence with a hole 40 formed in the cylinder itself 21 of the compressor. The hole 40 allows the assembly of the plug 36, from which descends the piston 20 of the compressor. In the cap itself 38, blocked through bolts 41, at the sides of the wall 37 for containing the plug 36, a pair of countersunk channels 42 are formed between the compressor cylinder 21 and the engine crankcase 26 and the compressor crankcase 25. Thus, the cap 38 has the functions of: closing the hole 24, operating as the pouring port 25, fitting and containing the plug 36 between the base of the connection rod 17 and the piston 20.

It can also be seen that in the cylinder head 22 a delivery channel 43 is formed, into which a fuel electroinjector 44 opens, which connects to the automatic valve 28 through a circular channel 45 partly obtained in the head and partly formed directly on the external diameter of the valve itself 28.

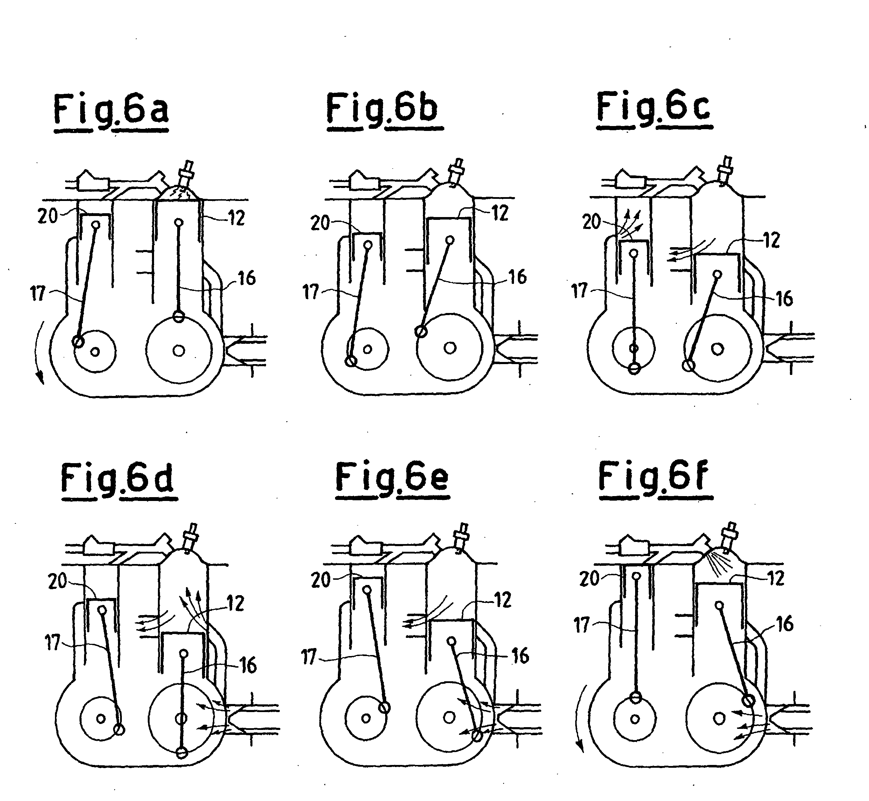

Figure 5 shows, in enlarged detail, the valve 28 according to the automatic-operation pneumatic-valve group with a floating needle.

A valve body 50, with a shaped stem and with a mushroom end 50a, is floating with respect to a seat 51, complementary to said mushroom end and formed in an annular element 52 positioned inside a case 53. The floating movement is such that the flow of the air-petrol mixture takes place through an air space 54 formed between the annular element 52, the seat 51 and the mushroom end 50a of the valve body 50.

The end stroke of the valve 50 is ensured by a first ring 55, which, when mounted on the stem of the valve itself, is brought into contact with a second ring 56 which is again mounted onto the stem. The preloading is assured by a spring 57 which interacts between the annular element 52 and the first ring 55. The entire valve group is enclosed in the quoted case 53 which is equipped with a thread 58 and a hexagonal head 59 to be screwed onto the engine head 22.

Such a complete valve group opens out directly onto a combustion chamber 60 positioned at the end of the cylinder 13.

The operation of the engine relative to a complete cycle, at intervals of 60°, will be described here with reference to figures 6a-f.

It is clear that through the present invention the compressor associated with the cylinder 13 is directly activated by the drive shaft 14 through the secondary connection rod 17 and the eccentric cam 18. The air which is present in the pump crankcase, consisting of the engine crankcase 26 and the compressor crankcase 25 which are in communication with each other, is compressed by the engine piston 12 and by the compressor piston 20, which go simultaneously, with a certain phasing, to their bottom dead points (figure 6a). The phasing of the pistons 12 and 20 is such that, while the engine piston 12 keeps the cleaning pipes of the main cylinder closed, the compressor piston 20 uncovers the countersunk channels 42 formed in the cap 38 and sucks back the air from the pressurised crankcase (figure 6b-c).

During the stage of compressing the air in the compressor cylinder 21, in the main cylinder 13 (figure 6d-e) the discharge and cleaning stages take place. In the two-stroke-cycle engine (figures 6e-f) the intake of the air needed by the crankcase for the successive stage is performed by the reed group 30. It is precisely at this moment that the contribution made by the compressor is stepped up which increases the pumping effect due to a greater variation in volume in the crankcase itself (supercleaning) with respect to a traditional two-stroke-cycle engine; moreover the supercharging during the delivery stage is guaranteed in that it mainly takes place when the exhaust port of the cylinder 13 is closed.

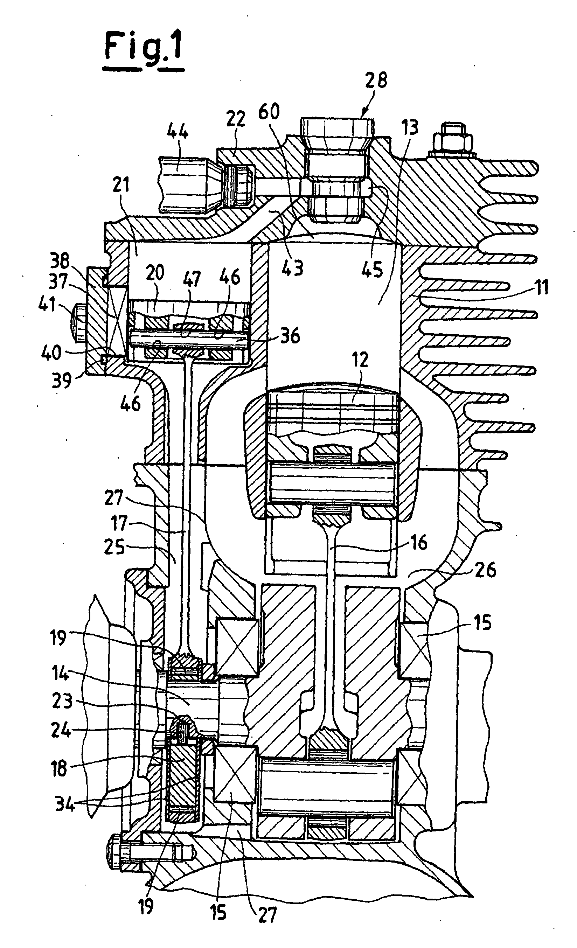

The liquid fuel is injected by the electroinjector 44 into the delivery channel 43 of the compressor (figure 1). The mixture of air and fuel is injected into the combustion chamber 60 in the moments preceding the end of the compression stage of the engine, through the automatic valve 28, which is actuated by the pressure difference which generates between the combustion chamber and the compressor chamber. It should be emphasised that at this moment while the engine piston 12 compresses the air in the main cylinder 13, the compressor piston 20, being advanced, compresses the air in its own cylinder 21 determining the supercharging during the injection stage. This is another main advantage to add to that regarding supercleaning which has been described previously.

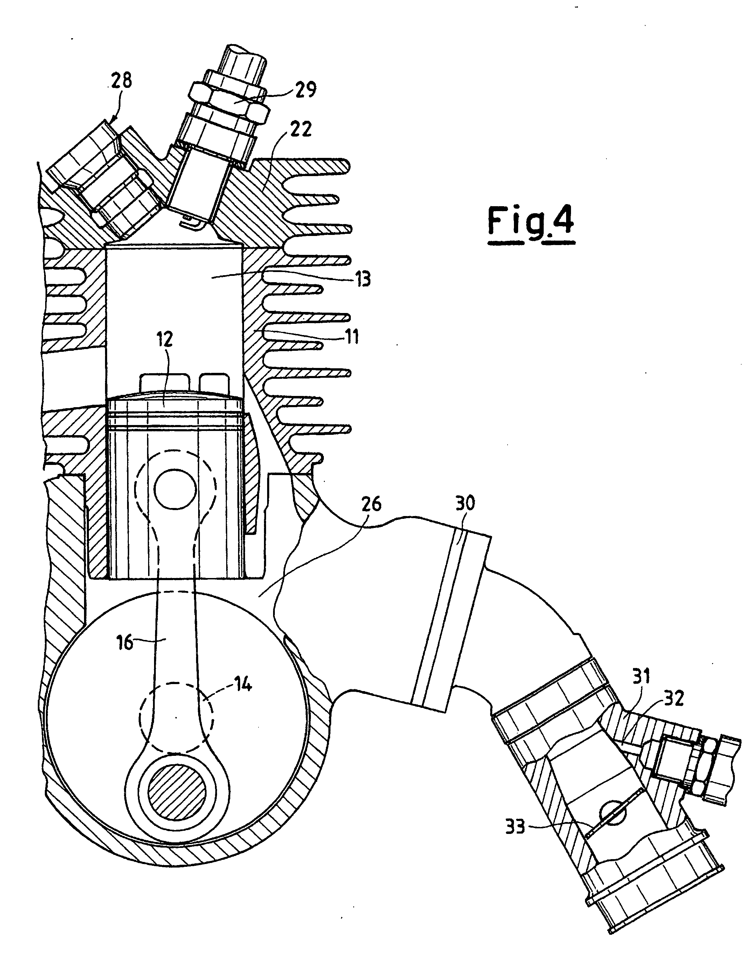

Aiming to optimise the operation of the compressor at determined rotation speeds, the use of suitable calibration or the insertion of a nozzle in the delivery pipe 43 is foreseen. The form of the air/fuel mixture spray into cylinder 13 is guided by the automatic valve 28 and is directed in countercurrent (figure 4) with respect to the cleaning flow; thus the risk of hydrocarbon leakage from the exhaust is reduced and the formation of the stratified charge is made easier.

With respect to two-stroke-system engines using air-assisted direct fuel injection that are currently known, the present invention is characterised by the integration of the air compressor in the driving cylinder formed on the side of it between the countersunk walls and the plane of the head, and operated directly by the drive shaft.

Such a configuration allows a series of advantageous solutions which are attached hereto:
a) the compressor cylinder 21 formed in the main cylinder 13 allows the volume of harmful substances coming from the delivery pipe 43 to be kept to a minimum and also allows an encumbrance which is very similar to that of a normal two-stroke-cycle cylinder to be achieved whilst still maintaining the constructive simplicity and a limited cost;
b) the reduction of the number of specific components relative to solutions which require transmission between drive shaft 14 and compressor brings a reduction in production and maintenance costs, but at the same time also an increase in the mechanical yield and in the ease of maintenance and assembly of the various parts;
c) the compressor, thanks to a greater pumping effect, contributes to guaranteeing a superclean, a supercharge and to making up, to a large extent, for the negative effect due to the harmful areas added into the crankcase for the control of the compressor through a connection rod. The compressor draws the mixture directly into the engine crankcase 26 and its filling is controlled by the opening on the throttle body 31. This allows the system to operate correctly even at tick-over or with choked gas. The combination of the supercleaning and supercharging effect upon the operation of the compressor brings the engine to levels of driving torque which are greater than those which are achieved by traditional engines, making it possible to obtain the same performance at lower rotation speeds also with advantages in sound emissions;
d) a greater freedom of positioning of the pneumatic valve group 28 and sparking plug 29 on the cylinder head 22 is obtained, so as to optimise the formation of the spray for the realisation of the stratified charge. Thanks to a configuration of the head which is simple and not dependant upon other encumbrances, the position of the electroinjector 44 and the temperature sensor, moreover, can be optimised. This structure allows simple accessibility to all the components lodged on the head for maintenance and replacement reasons;
e) the two crank gears which are in the same environment, are lubricated from a single point of emission of oil 32, transported by the air taken into the engine crankcase 26 and situated on the pipe of the throttle body. The advantage is in the uniformity of the discharge and the precision of the power supply given that it is possible to control the dosage of oil through an electropump managed by the feeding and ignition system control unit. A further benefit is the lubrication of the automatic valve 28, otherwise not possible unless with specific and extremely onerous solutions.

Consequently, according to the present invention there are multiple advantages to highlight, starting with the thermodynamic efficiency in terms of supercleaning and supercharging. The centralisation of many functions on a few main components, without compromising its strength and the complexity of realisation, has therefore allowed the reduction in components which are suitable for operating the compressor with the consequent reduction in noisiness caused by various moving parts (for example the drive belt with respect to analogous systems existing up to now).

Also to be highlighted are an encumbrance which is practically the same as that of a traditional two-stroke-cycle engine, rapid accessibility and maintenance of all the main components, the possibility of optimising the position of the sparking plug and the automatic valve for the realisation of the stratified charge.

The sum of the described advantages makes this type of engine particularly suitable for mass production.

It can therefore be seen that all the aims of the present invention which were previously highlighted have been achieved.

The two-stroke-cycle internal combustion engine using pneumatically assisted fuel injection of the present invention thus conceived is susceptible to numerous modifications and variants, all falling within the same inventive concept.

Moreover, in practice the materials used, as well as their dimensions and the components, can be of any type according to the technical requirements.

## Claims

1. Two-stroke-cycle internal combustion engine using pneumatically assisted direct fuel injection comprising a cylindrical body (11) within which is foreseen a first driving cylinder 13 which contains a first piston (12) and a second compressor cylinder (21), which contains a second piston (20), both said pistons (12, 20) being connected through connection rods (16, 17) to a driving shaft (14), in a head of said cylindrical body (11) being foreseen a feed channel (43), into which a fuel electroinjector (44) opens, which is connected by an automatic valve (28) to a combustion chamber (60) at the end of the first cylinder (13), an engine crankcase (26) and a compressor crankcase (25) containing said connection rods (16, 17) and being connected through apertures (27), said second compressor cylinder (21) being connected to the compressor crankcase (25) through countersunk channels (42).

2. Two-stroke-cycle engine according to claim 1, **characterised in that** said countersunk channels (42) are formed in a closing cap (38) placed in a hole (40) formed in said second compressor cylinder (21) and locked to it (in 41).

3. Two-stroke-cycle engine according to claim 2, **characterised in that** in said hole (40) a plug (36) is inserted at the assembly stage for linking said second piston (20) to said second connection rod (17), said second compressor piston (20) being pulled down to receive said plug (36) in one of its holes (46).

4. Two-stroke-cycle engine according to claim 2, **characterised in that** said closing cap (38) has a wall (37) lying between said countersunk channels (42) which holds a plug (36) for locking said second piston (20) to said second connection rod (17).

5. Two-stroke-cycle engine according to claim 1, **characterised in that** said second connection rod (17) is mounted on said drive shaft (14) through an eccentric cam (18) with the interposition of a bearing (19), being moreover foreseen, for a correct assembly of said eccentric cam (18) on the drive shaft (14), a pin (24) inserted in a suitable hole (23) of said shaft and tightly connected to the eccentric cam serving as a reference.

6. Two-stroke-cycle engine according to claim 1, **characterised in that** said automatic valve (28) comprises a valve body (50), with a shaped stem and with mushroom ends (50a), placed floating with respect to a seat (51) formed in an annular element (52) placed inside a case (53), with a circular channel (45) connected to said delivery channel (43) being foreseen.

7. Two-stroke-cycle engine according to claim 6, **characterised in that** said circular channel (45) is in part obtained in said head of said cylindrical body (11) and in part formed directly on an external diameter of said case (53).

8. Two-stroke-cycle engine according to claim 6, **characterised in that** said automatic valve (28) foresees an end stroke through a first ring (55), which when mounted on said stem (50 is held in contact with a second ring (56) still inserted on the stem, with a spring (57) being present which interacts between said annular element (52) and said first ring (55).

## Patentansprüche

1. Zweitakt-Brennkraftmaschine, die eine pneumatisch unterstützte Kraftstoffdirekteinspritzung verwendet, umfassend einen zylindrischen Körper (11), in dem ein erster Antriebszylinder (13) vorgesehen ist, der einen ersten Kolben (12) enthält, und einen zweiten Kompressorzylinder (21), der einen zweiten Kolben (20) enthält, wobei die beiden Zylinder (12, 20) über Verbindungsstangen (16, 17) mit einer Antriebswelle (14) verbunden sind, wobei in einem Kopf des zylindrischen Körpers (11) ein Zufuhrkanal (43) vorgesehen ist, in den sich ein Kraftstoffelektroeinspritzventil (44) öffnet und der durch ein automatisches Ventil (28) mit einer Brennkammer (60) am Ende des ersten Zylinders (13) verbunden ist, ein Motorkurbelgehäuse (26) und ein Kompressorkurbelgehäuse (25), die die Verbindungsstäbe (16, 17) enthalten und über Durchbrechungen (27) verbunden sind, wobei der zweite Kompressorzylinder (21) mit dem Kompressorkurbelgehäuse (25) über eingelassene Kanäle (42) verbunden ist.

2. Zweitaktmaschine nach Anspruch 1, **dadurch gekennzeichnet, dass** die eingelassenen Kanäle (42) in einer Verschlusskappe (38) gebildet sind, die in einem Loch (40) angeordnet ist, das in dem zweiten Kompressorzylinder (21) gebildet ist, und an diesem verriegelt (in 41) ist.

3. Zweitaktmaschine nach Anspruch 2, **dadurch gekennzeichnet, dass** in dem Montagestadium zum Verbinden des zweiten Kolbens (20) mit der zweiten Verbindungsstange (17) in das Loch (40) ein Bolzen (36) eingesetzt wird, wobei der zweite Kompressorkolben (20) heruntergezogen wird, um den Bolzen (36) in einem seiner Löcher (46) aufzunehmen.

4. Zweitaktmaschine nach Anspruch 2, **dadurch gekennzeichnet, dass** die Verschlusskappe (38) eine Wand (37) aufweist, die zwischen den eingelassenen Kanälen (42) liegt und einen Bolzen (36) zum Verriegeln des zweiten Kolbens (20) an der zweiten Verbindungsstange (17) hält.

5. Zweitaktmaschine nach Anspruch 1, **dadurch gekennzeichnet, dass** die zweite Verbindungsstange (17) über einen Exzenternocken (18) an die Antriebswelle (14) unter Anordnung eines Lagers (19) dazwischen montiert ist, wobei überdies für eine richtigen Montage des Exzenternockens (18) an der Antriebswelle (14) ein Stift (24) in ein geeignetes Loch (23) der Welle eingesetzt ist und fest mit dem als Bezug dienenden Exzenternocken (18) verbunden ist.

6. Zweitaktmaschine nach Anspruch 1, **dadurch gekennzeichnet, dass** das automatische Ventil (28) einen Ventilkörper (50) mit einem geformten Schaft und mit Pilzkopfenden (50a) umfasst, der schwimmend in Bezug auf einen Sitz (51) angeordnet ist, der in einem ringförmigen Element (52) gebildet ist, das im Inneren eines Gehäuses (53) angeordnet ist, wobei ein mit dem Lieferkanal (43) verbundener kreisförmiger Kanal (45) vorgesehen ist.

7. Zweitaktmaschine nach Anspruch 6, **dadurch gekennzeichnet, dass** der kreisförmige Kanal (45) zum Teil in dem Kopf des zylindrischen Körpers (11) vorgesehen ist und zum Teil direkt an einem Außendurchmesser des Gehäuses (53) gebildet ist.

8. Zweitaktmaschine nach Anspruch 6, **dadurch gekennzeichnet, dass** das automatische Ventil (28) einen Endanschlag durch einen ersten Ring (55) aufweist, der, wenn er an dem Schaft (50) montiert ist, in Kontakt mit einem zweiten Ring (56) gehalten wird, der noch an dem Schaft eingesetzt ist, wobei eine Feder (57) vorhanden ist, die zwischen dem ringförmigen Element (52) und dem ersten Ring (55) in Wechselwirkung steht.

## Revendications

1. Moteur à combustion interne à deux temps utilisant l'injection directe de carburant assistée pneumatiquement comprenant un corps cylindrique (11) à l'intérieur duquel est prévu un premier cylindre d'entraînement (13) qui contient un premier piston (12) et un deuxième cylindre de compresseur (21), qui contient un deuxième piston (20), lesdits pistons (12, 20) étant tous deux reliés par des bielles (16, 17) à un arbre moteur (14), un canal d'alimentation (43) étant prévu dans une culasse dudit corps cylindrique (11), dans lequel canal débouche un injecteur électromagnétique (44) de carburant, qui est connecté par un clapet automatique (28) à une chambre de combustion (60) à l'extrémité du premier cylindre (13), un carter de moteur (26) et un carter de compresseur (25) qui contiennent lesdites bielles (16, 17) et qui sont reliés par des ouvertures (27), ledit deuxième cylindre de compresseur (21) étant relié au carter de compresseur (25) via des canaux fraisés (42).

2. Moteur à deux temps selon la revendication 1, **caractérisé en ce que** lesdits canaux fraisés (42) sont formés dans un bouchon de fermeture (38) placé dans un trou (40) formé dans ledit deuxième cylindre de compresseur (21) et fixé à celui-ci (en 41).

3. Moteur à deux temps selon la revendication 2, **caractérisé en ce qu'**une broche (36) est insérée dans ledit trou (40) au stade du montage pour relier ledit deuxième piston (20) à ladite deuxième bielle (17), ledit deuxième piston de compresseur (20) étant tiré vers le bas pour recevoir ladite broche (36) dans un de ses trous (46).

4. Moteur à deux temps selon la revendication 2, **caractérisé en ce que** ledit bouchon de fermeture (38) comporte une paroi (37) qui se trouve entre lesdits canaux fraisés (42) et qui tient une broche (36) pour fixer ledit deuxième piston (20) à ladite deuxième bielle (17).

5. Moteur à deux temps selon la revendication 1, **caractérisé en ce que** ladite deuxième bielle (17) est montée sur ledit arbre moteur (14) via une came à excentriques (18) avec l'interposition d'un roulement (19), étant prévu en outre, pour un montage correct de ladite came à excentriques (18) sur l'arbre moteur (14), un axe (24) inséré dans un trou adapté (23) dudit arbre et connecté de manière serrée à la came à excentriques servant de référence.

6. Moteur à deux temps selon la revendication 1, **caractérisé en ce que** ledit clapet automatique (28) comprend un corps de soupape (50), avec une tige façonnée et des extrémités en forme de champignon (50a), qui est en flottement par rapport à un siège (51) formé dans un élément annulaire (52) placé à l'intérieur d'un boîtier (53), un canal circulaire (45) connecté audit canal de distribution (43) étant prévu.

7. Moteur à deux temps selon la revendication 6, **caractérisé en ce que** ledit canal circulaire (45) est en partie obtenu dans ladite culasse dudit corps cylindrique (11) et en partie formé directement sur un diamètre extérieur dudit boîtier (53).

8. Moteur à deux temps selon la revendication 6, **caractérisé en ce que** ledit clapet automatique (28) a une course d'extrémité à travers une première bague (55), qui lorsqu'elle est montée sur ladite tige (50) est maintenue en contact avec une deuxième bague (56) toujours insérée sur la tige, un ressort (57) étant présent pour interagir entre ledit élément annulaire (52) et ladite première bague (55).
